# EUROPÄISCHE PATENTSCHRIFT

(11) **EP 1 328 685 B1**
(45) Veröffentlichungstag und Bekanntmachung des Hinweises auf die Patenterteilung: **21.12.2005**
(21) Anmeldenummer: 01988509.4
(22) Anmeldetag: 11.10.2001
(51) Int. Cl.: E01C 19/38, E02D 3/074

(54) **FAHRBARE BODENVERDICHTUNGSVORRICHTUNG MIT FAHRTRICHTUNGSSTABILISIERUNG**
MOBILE SOIL COMPACTING DEVICE WHOSE DIRECTION OF TRAVEL IS STABILIZED
DISPOSITIF DE COMPACTAGE DE SOL MOBILE A STABILISATION DU SENS DE LA MARCHE

(30) Priorität: 27.10.2000 DE 10053446
(43) Veröffentlichungstag der Anmeldung: 23.07.2003
(73) Patentinhaber: Wacker Construction Equipment AG, 80809 München (DE)
(72) Erfinder: SICK, Georg, 82340 Feldafing (DE)
(74) Vertreter: Hoffmann, Jörg Peter
(86) Internationale Anmeldenummer: PCT/EP2001/011793
(87) Internationale Veröffentlichungsnummer: WO 2002/035005

(56) Entgegenhaltungen:
- WO-A-00/56984
- DE-B- 1 213 355
- GB-A- 944 922
- US-A- 6 113 309

## Beschreibung

Die Erfindung betrifft eine fahrbare Bodenverdichtungsvorrichtung bzw. ein Bodenverdichtungssystem mit mehreren fahrbaren Bodenverdichtungsvorrichtungen.

Als Bodenverdichtungsvorrichtungen wie in WO 00/56984 oder US 6 113 309 A sind unter anderem fernlenkbare Vibrationsplatten bekannt, bei denen ein Schwingungs- bzw. Unwuchterreger nicht nur die für die Bodenverdichtung erforderliche Vertikalschwingung der Platte, sondern durch geeignete Verstellmöglichkeiten im Schwingungserreger auch einen Vortrieb bewirkt. Die Lenkbarkeit wird durch das Erzeugen gerichteter Schwingungen außerhalb einer Hochachse der Vibrationsplatte erreicht. Derartige Vibrationsplatten weisen üblicherweise zwei parallele, gegenläufig drehende Unwuchtwellen auf (daher die Bezeichnung "Zwei-Wellen-Erreger"), wobei eine der Wellen zwei voneinander unabhängig in ihrer relativen Phasenlage verstellbare axial angeordnete Unwuchten trägt. Die Summe der m·r-Werte (m = Unwuchtmasse, r = Exzentrizität des Schwerpunktes der Unwuchtmasse) dieser Unwuchten entspricht dem m·r-Wert der zweiten, ebenfalls eine Unwucht tragenden, aber gegenläufig drehenden Erregerwelle. Durch geeignete Synchronisation der Phasenwinkel der drei Unwuchten können in bekannter Weise gerichtete Schwingungen erzeugt werden. Ein derartiger Schwingungserreger ist aus der DE-G 78 18 542.9 bekannt.

Wird der resultierende Kraftvektor der Schwingungen in Fahrtrichtung der Vibrationsplatte nach vorne geneigt, wird die Maschine nach vorne beschleunigt. Für eine Kurvenfahrt nach links wird die linke Unwucht der die zwei Unwuchten tragenden Welle mit der großen Unwucht der anderen Welle derart synchronisiert, dass der aus den drei rotierenden Unwuchten resultierende Kraftvektor ein Drehmoment (Giermoment) um die Hochachse der Vibrationsplatte erzeugt. Durch geeignete Synchronisation der Unwuchten läßt sich auch eine sogenannte Standrüttelung einstellen, bei der der resultierende Kraftvektor senkrecht gerichtet ist. Entsprechend läßt sich auch eine Rückwärtsfahrt oder eine Drehung der Vibrationsplatte im Stand erreichen.

Die Steuerung der Vibrationsplatte erfolgt üblicherweise durch elektromechanische oder elektrohydraulische Stellglieder zum relativen Verdrehen der Unwuchten, die mittels Funk-, Infrarot- oder Kabelfernsteuerung angesteuert werden.

Aufgrund der taumelnden und teilweise am Boden schleifenden Sprungbewegung der Vibrationsplatte im Rüttelbetrieb werden je nach Bodenbeschaffenheit und Reibungskoeffizient zwischen Platte und Boden ständig wechselnde Kräfte und Drehmomente auf die fahrende Vibrationsplatte übertragen. Eine geringe Richtungskonstanz im Fahrbetrieb der Vibrationsplatte ist die Folge, so dass in kurzen Zeitabständen Richtungskorrekturen durch den Bediener erforderlich sind, um ein Ausbrechen der Vibrationsplatte zu verhindern. Dazu ist es bei ferngelenkten Vibrationsplatten üblich, die Vibrationsplatte anzuhalten und im Stillstand durch Erzeugung eines maximalen Giermomentes um die Hochachse zu drehen. Eine Kurvenfahrt, also die Erzeugung eines Giermomentes bei gleichzeitiger Vortriebsbewegung der Vibrationsplatte, ist zwar prinzipiell möglich, jedoch aufgrund der geringen Richtungsstabilität in der Praxis kaum durchführbar. Das ständige Ausrichten der Vibrationsplatte erfordert vom Bediener höchste Konzentration.

Der Erfindung liegt die Aufgabe zugrunde, eine Bodenverdichtungsvorrichtung mit verbesserter Fahrtrichtungsstabilität anzugeben, mit der trotz unvorhersehbarer Krafteinflüsse des Bodens eine konstante Geradeausfahrt oder eine koordinierte Kurvenfahrt möglich ist.

Die Aufgabe wird erfindungsgemäß durch eine Bodenverdichtungsvorrichtung mit den Merkmalen von Patentanspruch 1 gelöst. Die erfindungsgemäße Lösung für die Bodenverdichtungsvorrichtung läßt sich auch auf eine mit mehreren Schwingungserregern ausgestattete Bodenverdichtungsvorrichtung und auf ein aus mehreren Bodenverdichtungsvorrichtungen bestehendes Bodenverdichtungssystem übertragen, das in Patentanspruch 16 definiert ist. Vorteilhafte Weiterbildungen der Erfindung sind in den abhängigen Ansprüchen angegeben.

Die erfindungsgemäße Bodenverdichtungsvorrichtung weist eine Bewegungserfassungseinrichtung zum Erfassen eines Istwerts für die eine Ausrichtung, eine Fahrtrichtung, einen Kurs über Grund, eine Drehrate und/oder eine Fahrtgeschwindigkeit der Bodenverdichtungsvorrichtung umfassende Fahrbewegung auf. Durch die Bewegungserfassungseinrichtung läßt sich die tatsächliche, z. B. durch Bodenunebenheiten oder die Bodenbeschaffenheit bewirkte Bewegung oder Ausrichtung der die Bodenverdichtungsvorrichtung feststellen.

Der von der Bewegungserfassungseinrichtung abgegebene Istwert wird in einer Fahrtregelungseinrichtung mit einem vom Bediener mittels eines Fahrtgebers vorgegebenen Sollwert verglichen. Die Fahrtregelungseinrichtung steuert die Lenkeinrichtung und/oder den Fahrantrieb der Bodenverdichtungsvorrichtung derart an, dass eine Differenz zwischen Ist- und Sollwert, also eine Regelabweichung, minimal wird. Das bedeutet, dass durch Bodeneffekte bzw. die taumelnde Bewegung der Vibrationsplatte hervorgerufene Richtungsänderungen unmittelbar durch die Bewegungserfassungseinrichtung registriert werden können, so dass die Fahrtregelungseinrichtung eine entsprechende Gegenkorrektur vornehmen und die Bodenverdichtungsvorrichtung wieder auf die vom Bediener gewünschte und in Form des Sollwerts vorgegebene Fahrtbewegung, z. B. einen Kurs über Grund bringen kann. Das hat zur Folge, dass die Bodenverdichtungsvorrichtung selbst auf schrägem oder unebenem Untergrund einen konstanten Geradeauslauf vollziehen kann. Weiterhin ist eine koordinierte Kurvenfahrt mit gleichzeitiger Drehung und Vorwärtsbewegung entsprechend den Wünschen des Bedieners möglich, ohne dass der Bediener permanent mit dem Fahrtgeber korrigierend eingreifen müßte.

Der Begriff "Fahrbewegung" wird in Zusammenhang mit der Erfindung als Oberbegriff für eine Vielzahl einzelner physikalischer Größen verwendet, die im weitesten Sinne die Bewegung der Bodenverdichtungsvorrichtung betreffen: Unter "Ausrichtung" ist eine Stellung der Bodenverdichtungsmaschine in einem Inertialsystem bzw. über Grund zu verstehen. Als "Fahrtrichtung" ist die Bewegungsrichtung der Bodenverdichtungsvorrichtung in einem Inertialsystem, z. B. dem Erdmagnetfeld zu sehen. Davon unterscheidet sich der "Kurs über Grund", der der tatsächlichen Bewegung der Bodenverdichtungsvorrichtung über dem zu verdichtenden Boden entspricht. So kann z. B. eine Bodenverdichtungsvorrichtung in Richtung Nord-Westen ausgerichtet sein, aber aufgrund der durch den Schwingungserreger erzeugten Antriebswirkung eine Fahrtrichtung schräg dazu, nämlich in Richtung Westen, einnehmen. Wenn nun die Bewegung der Bodenverdichtungsvorrichtung z. B. durch einen schrägen Untergrund oder durch Bodenunebenheiten gestört wird, besteht die Möglichkeit, dass die Fahrtrichtung der Bodenverdichtungsvorrichtung zwar konstant in Richtung Westen gerichtet ist, aber aufgrund der durch die Bodenunebenheiten hevorgerufenen Stöße jeweils seitlich versetzt wird. Der sich daraus ergebende Kurs über Grund weicht folglich von der eingestellten Fahrtrichtung ab.

Bei einer vorteilhaften Ausführungsform der Erfindung ist die Fahrtregelungseinrichtung in der Lage, bei einem entsprechenden Bedienerwunsch die Lenkeinrichtung und/oder den Fahrantrieb derart anzusteuern, dass sich die Bodenverdichtungsvorrichtung mit maximaler Geschwindigkeit bei minimaler Regelabweichung, also größtmöglicher Richtungskonstanz, fortbewegt. Das bedeutet, dass auch bei Kurvenfahrten hohe Fahrtgeschwindigkeiten der Bodenverdichtungsvorrichtung erreicht werden können.

Als Bewegungserfassungseinrichtung eignen sich handelsübliche Gierratensensoren, Kreiselkompasse, optische Faserkreisel, Erdmagnetfeldsensoren, GPS-Empfänger (GPS: Global Positioning System) oder Beschleunigungssensoren und geeignete Kombinationen aus den genannten Elementen.

Je nach Aufwand bei der Ausgestaltung der Bewegungserfassungseinrichtung und der Regelalgorithmen in der Fahrtregelungseinrichtung lassen sich unterschiedliche Regelverhalten einstellen: Bei einem relativ einfachen Regelungsfall ist ein Kreiselkompass vorgesehen, der mit einer zugehörigen Regelung versucht, einer durch eine Störung hervorgerufenen Drehung um die Gierachse der Bodenverdichtungsvorrichtung entgegen zu wirken. Wenn die durch Fremdeinwirkung hervorgerufene Drehung jedoch zu stark ist, wird die Regelung überwunden, und eine dauerhafte Regelabweichung stellt sich ein. Bei einer aufwändigeren Regelung ist es dagegen möglich, dass durch die Bewegungserfassungseinrichtung eine Abweichung der Fahrtrichtung festgestellt und ausgeregelt wird. Das bedeutet, dass sich die Bodenverdichtungsvorrichtung immer wieder in die gleiche Richtung bewegen wird. Ein durch Fremdeinwirkung hervorgerufener Parallelversatz der Bodenverdichtungsvorrichtung lässt sich dadurch jedoch nicht korrigieren. Eine noch aufwändigere, dem Flugzeugbau entlehnte Regelungstechnik registriert dagegen sogar Abweichungen vom vorgegebenen Kurs über Grund und ist in der Lage, nicht nur die Fahrtrichtung konstant zu halten bzw. nach erfolgten Auslenkungen entsprechend gegenzusteuern, sondern auch einen Parallelversatz zu korrigieren und die Maschine wieder auf den ursprünglichen Kurs zu bringen.

Die der Erfindung zugrundeliegende technische Lehre läßt sich besonders vorteilhaft bei einer Bodenverdichtungsvorrichtung einsetzen, die mehrere Schwingungserregersysteme aufweist, da die Drehmomente, z. B. um die Hochachse der Bodenverdichtungsvorrichtung erfindungsgemäß sensibel und unmittelbar gemäß den Erfordernissen zur Stabilisierung der Fahrtrichtung geregelt werden können. Damit werden auch Kombinationen von Schwingungserregern und deren Vortriebsrichtungen möglich, die bei manueller Regelung, also ohne Erfassung und Auswertung der Fahrbewegung aufgrund der Richtungsinstabilität des Gesamtsystems nicht beherrschbar wären. Außerdem können einfach aufgebaute Schwingungserreger, z. B. bestehend aus einem Paar gegenläufig drehender Unwuchten mit um die Erregerquerachse verstellbarem, resultierendem Kraftvektor eingesetzt werden.

Die Schwingungserregersysteme sind vorzugsweise so anzuordnen, dass ihre Vortriebsrichtungen parallel verlaufen. Eine Richtungssteuerung erfolgt über die Ausrichtung der Kraftvektoren um die Erregerquerachse, wodurch ein Drehmoment um die Hochachse der Verdichtungsvorrichtung ausgeübt wird.

Alternativ dazu eigen sich auch Schwingungserregersysteme, bei denen die Drehfrequenz, also die Drehzahl der rotierenden Unwuchtwellen z.B. über Hydraulik-Proportionalventile einstellbar sind. Durch Veränderung der Drehzahl der Unwuchtwellen ändert sich die resultierende Zentrifugalkraft, so dass die gewünschten Kraftwirkungen eingestellt werden können.

Bei einer anderen Ausführungsform unterscheidet sich die Vortriebsrichtung von wenigstens einem der Schwingungserregersysteme von der Vortriebsrichtung von wenigstens einem anderen Schwingunsgerregersystem. Die Schwingungserregersysteme können Schwingungen ohne oder mit Synchronisation erzeugen.

Bei einer bezogen auf die Vortriebsrichtungen senkrechten Anordnung der Schwingungserregungseinrichtungen dient z. B. ein Erregersystem dem Vor- und Rücklauf der Bodenverdichtungsvorrichtung und das zweite Erregersystem der Richtungssteuerung. In ungestörter Geradeausfahrt ist der resultierende Kraftvektor des zur Richtungssteuerung vorgesehenen Erregersystems senkrecht zur Ebene, also ohne Vortriebsrichtung, ausgerichtet. Alternativ dazu kann der Kraftvektor auch gezielt oszillierend nach links und rechts gerichtet werden, um z. B. Schubspannungen in das zu verdichtende Gut einzubringen.

In einer besonderen Ausführung der Erfindung sind zwei synchronisierte Schwingungserregersysteme übereinander, mit senkrecht zueinander stehenden Vortriebsrichtungen in der Bodenverdichtungsvorrichtung angeordnet. Durch geeignete Ansteuerung der beiden Schwingungserregersysteme kann der resultierende Kraftvektor um die Hochachse der Bodenverdichtungsvorrichtung beliebig ausgerichtet werden. In einer weiteren vorteilhaften Ausführungsform kann der resultierende Kraftvektor im Schwerpunkt der Bodenverdichtungsvorrichtung angreifen. In Verbindung mit der Richtungsstabilisierung und z. B. einer Bodenkontaktplatte mit kreisförmigem Grundriss kann bei dieser Ausführungsform eine besonders hohe Richtungsstabilität und Manövrierfähigkeit der Bodenverdichtungsvorrichtung erreicht werden.

Bei einem Bodenverdichtungssystem gemäß der Erfindung können mehrere Bodenverdichtungsvorrichtungen starr oder elastisch miteinander verbunden betrieben werden. Wie bei der vorstehend beschriebenen einzelnen Bodenverdichtungsvorrichtung ist eine Bewegungserfassungseinrichtung zum Erfassen eines Istwerts für die Fahrbewegung des gesamten Bodenverdichtungssystems vorgesehen, der in einer Fahrtregelungseinrichtung mit einem vom Bediener vorgegebenen Sollwert verglichen wird. Die Fahrtregelungseinrichtung steuert die einzelnen Fahrantriebe der jeweiligen Bodenverdichtungsvorrichtungen derart an, dass die Differenz zwischen Ist- und Sollwert minimal wird. Auf diese Weise lassen sich mehrere Bodenverdichtungsvorrichtungen zu einer Einheit zusammenfassen, was eine erheblich höhere Arbeitsleistung ermöglicht. Durch die Fahrtregelungseinrichtung bleibt auch das komplexe Gesamtsystem für den Bediener einfach beherrsch- und steuerbar.

Das hat zur Folge, dass keine der Bodenverdichtungsvorrichtungen eine eigene Lenkeinrichtung benötigt. Vielmehr kann bei dem aus mehreren Bodenverdichtungsvorrichtungen bestehenden System durch Ansteuern der jeweiligen, den individuellen Vortrieb der zugehörigen Bodenverdichtungsvorrichtung erzeugenden Fahrantriebe die Fahrtgeschwindigkeit und die Fahrtrichtung, d. h. die Fahrbewegung des Gesamtsystems, eingestellt werden. Aufgrund der permanenten Erfassung der Ist-Fahrbewegung regelt die Fahrtregelungseinrichtung eventuelle Abweichungen vom Wunsch des Bedieners unmittelbar aus, so dass eine konstante und koordinierte Bewegung erreicht wird.

Die Bodenverdichtungsvorrichtungen sind bei einer bevorzugten Ausführungsform der Erfindung von einer Verbindungstruktur derart gehalten, dass die Vortriebsrichtungen der einzelnen Bodenverdichtungsvorrichtungen parallel angeordnet sind. Ein zur Richtungsänderung erforderliches Moment um die Hochachse des Verbundes wird durch Ansteuern der einzelnen Schwingungserreger erzeugt.

Bei einer anderen Ausführungsform der Erfindung unterscheidet sich die Vortriebsrichtung von wenigstens einer der Bodenverdichtungsvorrichtungen von der Vortriebsrichtung von wenigstens einer anderen Bodenverdichtungsvorrichtung. Durch Ansteuerung der einzelnen, zur Erzeugung von Vortrieb und Richtungsstabilisierung geeignet angeordneten Fahrantriebe ist es möglich, dass sich das gesamte Bodenverdichtungssystem richtungs- oder kursstabilisiert fortbewegt.

Diese und weitere Vorteile und Merkmale der Erfindung werden nachfolgend anhand von Beispielen unter Zuhilfenahme der begleitenden Figuren näher erläutert. Es zeigen
- **Fig. 1**: eine schematische Seitenansicht einer erfindungsgemäßen fernlenkbaren Bodenverdichtungsvorrichtung;
- **Fig. 2a und 2b**: tabellarisch die Zusammenhänge zwischen einer Fahrtge-berstellung, einem Istwert von einer Bewegungserfassungseinrichtung, einer Stellung eines Schwingungserregers und einer resultierenden Fahrbewegung bei einer erfindungsgemäßen Bodenverdichtungsvorrichtung in verschiedenen Fahrzuständen;
- **Fig. 3a bis 3e**: in schematischer Draufsicht Schwingungserreger- und Vortriebskombinationen bei einer erfindungsgemäßen Bodenverdichtungsvorrichtung; und
- **Fig. 4a bis 4d**: eine schematischer Draufsicht auf unterschiedliche Ausführungsformen eines erfindungsgemäßen Bodenverdichtungssystems.

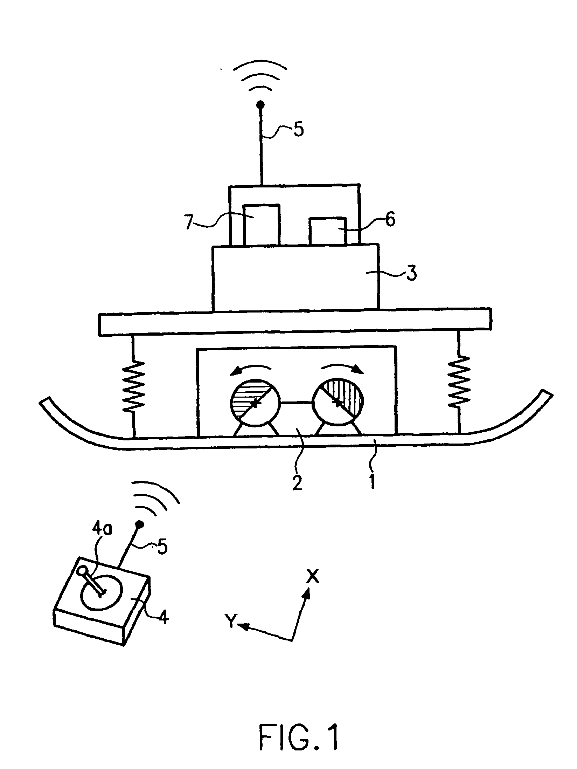

Die Erfindung wird anhand einer in Fig. 1 gezeigten, als Bodenverdichtungsvorrichtung dienenden, fernsteuerbaren Vibrationsplatte erläutert. Die Erfindung läßt sich jedoch auch auf andere Bodenverdichtungsvorrichtungen, wie z. B. Walzen, oder nicht ferngesteuerte Vibrationsplatten übertragen.

Die Vibrationsplatte weist eine Bodenkontaktplatte 1 auf, auf der ein als Schwingungserregungseinrichtung dienender Zwei-Wellen-Schwingungserreger 2 angebracht ist, wie er bereits oben unter Bezugnahme auf den Stand der Technik erläutert wurde, und dessen zweite Welle zwei hinsichtlich ihrer Phasenlage unabhängig voneinander einstellbare Unwuchten trägt. Der Zwei-Wellen-Schwingungserreger 2 wird durch einen Motor 3 in bekanner Weise angetrieben. Die Schwingungserregungseinrichtung, also der Zwei-Wellen-Schwingungserreger 2 dient gleichzeitig als Fahrantrieb und als Lenkeinrichtung, so dass die Erzeugung des für die Fahrtgeschwindigkeit, die Vorwärts- bzw. Rückwärtsbewegung und eines Drehmoments um die Hochachse der Vibrationsplatte erforderlichen Vortriebs mittels des Zwei-Wellen-Schwingungserregers 2 erfolgt.

Die Vibrationsplatte wird über eine als Fahrtgeber dienende Fernsteuerung 4 mit einem sogenannten Joystick 4a mittels Funk, Infrarot oder Kabel vom Bediener angesteuert. Der Bediener trägt dazu einen Steuerkasten, auf dem der in X- und Y-Richtung bewegliche Joystick 4a, eine Art Steuerhebel angeordnet ist. Eine Auslenkung des Joysticks 4a in X-Richtung bewirkt eine Vorwärtsfahrt der Vibrationsplatte, während eine Auslenkung des Joysticks 4a in positive oder negative Y-Richtung eine entsprechende Links- oder Rechts-Drehung der Vibrationsplatte bewirkt. Das Drehsignal kann auch eine Vorgabe für die Drehrate der Vibrationsplatte oder für einen beabsichtigten Kurvenradius sein. Selbstverständlich eignet sich zur Steuerung der Vibrationsplatte auch jede andere Art außer der gezeigten Fernsteuerung 4, so z. B. eine direkt an der Vibrationsplatte angebrachte Steuereinrichtung.

Im in Fig. I gezeigten Beispiel wird ein durch die Fernsteuerung 4 erzeugtes Steuersignal über Antennen 5 zur Vibrationsplatte übertragen, wo es zur Einstellung der Fahrtgeschwindigkeit, der Fahrtrichtung und gegebenenfalls der Lenkung ausgewertet wird.

Die Lenkung, also in erster Linie die Erzeugung eines Giermoments um eine Hochachse der Vibrationsplatte, erfolgt ebenfalls durch die Schwingungserregungseinrichtung, die in diesem Fall auch als Lenkeinrichtung dient. Die Schwingungserregungseinrichtung bildet bei der Vibrationsplatte gemäß Fig. also gleichzeitig den Fahrantrieb und die Lenkeinrichtung. Bei anderen Ausführungsformen der Erfindung können die Funktionen jedoch auch von getrennt aufgebauten und getrennt ansteuerbaren Einrichtungen übernommen werden.

Die von der Wirkung des Schwingungserregers, aber auch von äußeren Einflüssen, z. B. von der Reibung am Boden abhängige tatsächliche Fahrbewegung der Vibrationsplatte, die sich aus der Fahrtgeschwindigkeit und der Fahrtrichtung zusammensetzt, wird durch eine Bewegungserfassungseinrichtung 6 bestimmt. Je nach Einsatzzweck eignen sich für die Bewegungserfassungseinrichtung 6 Gierratensensoren zur Erfassung der Drehung um die Hochachse der Vibrationsplatte, Kreiselkompasse oder optische Faserkreisel zur Erfassung von Richtungsänderungen bezüglich eines Inertialsystems, Erdmagnetfeldsensoren zur Bestimmung der Relativstellung der Vibrationsplatte im Erdmagnetfeld, GPS-Empfänger oder Beschleunigungssensoren. Zur Erhöhung der Meßgenauigkeit wird es oftmals zweckmäßig sein, mehrere dieser Bauelemente zu einer Bewegungserfassungseinrichtung 6 zusammenzufassen. So ist es z. B. auch möglich, Bewegungserfassungseinrichtungen für Navigationssysteme aus dem Automobil- oder Flugzeugbau zu übernehmen.

Außer der Fahrtgeschwindigkeit und der Fahrtrichtung kann es auch zweckmäßig sein, die Drehrate um die Hochachse der Vibrationsplatte oder die Ausrichtung der Vibrationsplatte bezüglich eines Inertialsystems zu ermitteln.

Ein von der Bewegungserfassungseinrichtung 6 erzeugtes, dem Istwert für die Fahrbewegung entsprechendes Signal wird an eine Fahrtregelungseinrichtung 7 geliefert, die außerdem durch das Sollwertsignal von der Fernsteuerung 4 beaufschlagt wird. Die Fahrtregelungseinrichtung 7 bildet eine einer Regelabweichung entsprechende Differenz zwischen dem Ist- und dem Sollwert. Mit Hilfe geeigneter Regelalgorithmen, die vom Fachmann entsprechend dem Eigenverhalten der Vibrationsplatte auszulegen sind, steuert die Fahrtregelungseinrichtung 7 den Schwingungserreger 2, also den Fahrantrieb und die Lenkeinrichtung derart an, dass die Regelabweichung minimal wird. Daduch wird die Vibrationsplatte sehr präzise auf dem vom Bediener gewünschten Kurs gehalten.

Soweit von der Bewegungserfassungseinrichtung 6 Istwerte zu einer Drehrate der Vibrationsplatte oder zu ihrer Ausrichtung geliefert werden, ist es auch möglich, diese Istwerte mit entsprechenden Sollwerten abzugleichen. Somit kann die Stellung der Vibrationsplatte z. B. im Stillstand, in dem streng genommen keine Fahrtrichtung und keine Fahrtgeschwindigkeit vorliegt, eingestellt werden.

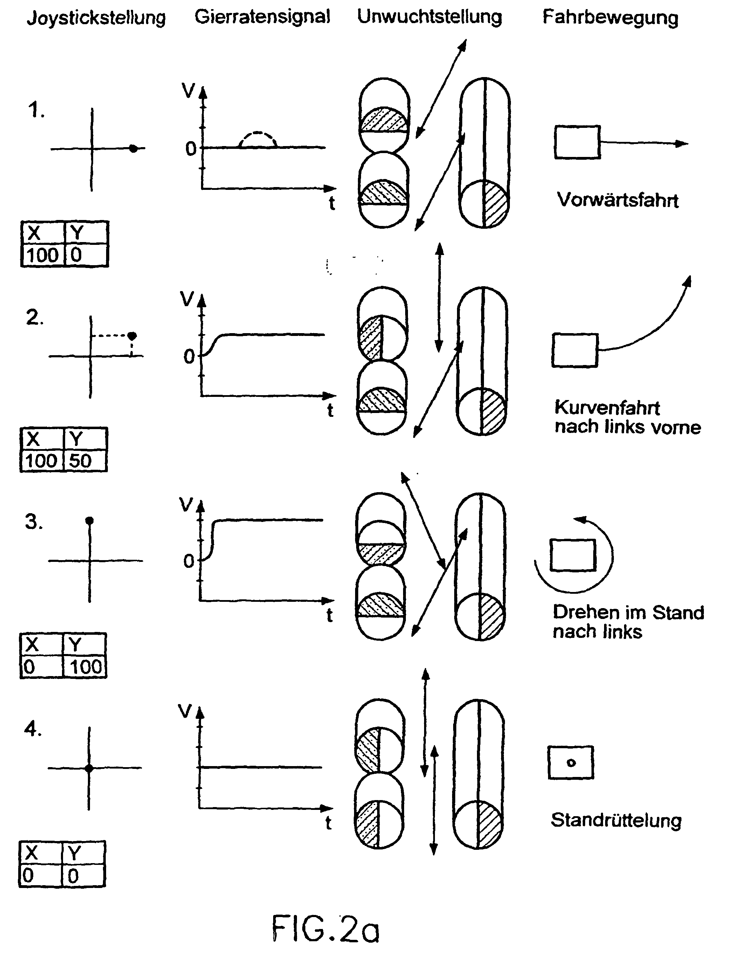

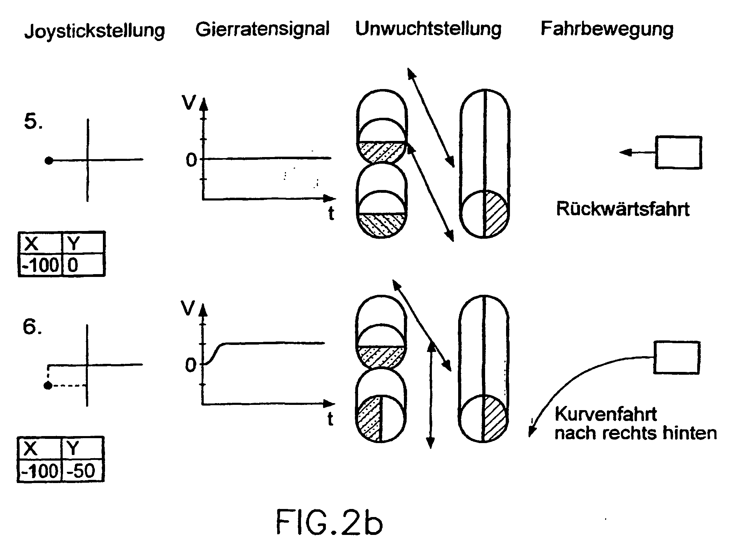

Die Fig. 2a und 2b zeigen exemplarisch das Zusammenspiel der wesentlichen Bauelemente der Vibrationsplatte in Zusammenhang mit unterschiedlichen Fahrzuständen in tabellarischer Form. In den Spalten der Tabelle werden die Joystick-Stellung, d. h. die Stellung des Joysticks 4a an der Fernbedienung 4, ein Gierratensignal als Darstellung eines von der Bewegungserfassungseinrichtung 6 gelieferten Istwerts, die Stellung der Unwuchten im Schwingungserreger 2 sowie die resultierende Fahrbewegung der Vibrationsplatte gegenübergestellt.

Der Schwingungserreger 2 entspricht dem bereits beschriebenen Zwei-Wellen-Schwingungserreger, bei dem zwei Wellen gegenläufig, aber miteinander synchronisiert drehbar sind und jeweils Unwuchten tragen. Auf einer der Wellen (in Fig. 2a-1 die linke) ist die Unwuchtmasse in zwei axial angeordnete Teilmassen aufgeteilt, die zwar gemeinsam auf der zugehörigen Welle mitdrehen, jedoch in ihrer Phasenlage zueinander verstellbar sind, wie durch einen Vergleich zwischen Fig. 2a-1 und Fig. 2a-2 erkennbar ist.

Zusätzlich zu den Unwuchtmassen sind auch die zwischen der Unwuchtmasse der einen (rechten) Welle und der jeweiligen anderen (linken) Teilmasse entstehenden resultierenden Kraftvektoren eingezeichnet.

In Fig. 2a-1 sind die Unwuchtmassen in der Schwingungserregungseinrichtung derart synchronisiert, dass ein maximaler Vortrieb und damit eine maximale Vorwärtsgeschwindigkeit der Vibrationsplatte erreicht werden kann. Die resultierenden Kraftvektoren stehen daher in einem Winkel von etwa 45° nach vorne geneigt.

Bewirkt wird diese Unwuchtstellung durch den Joystick 4a, der einen maximalen X-Wert (hier: 100) liefert.

Solange sich die Platte konstant vorwärtsbewegt, bleibt das Gierratensignal auf einem konstanten Wert, z. B. bei Null, da keine Drehung der Vibrationsplatte um ihre Hochachse erfolgt. Zur Erläuterung des Verlaufs des Gierratensignals wird angenommen, dass das Gierratensignal eine Spannung ist, deren Verlauf über der Zeit dargestellt wird.

Exemplarisch wird in Fig. 2a-1 auch der Fall einer Störung, z. B. aufgrund einer Unebenheit des Bodens gezeigt. Das Gierratensignal schlägt dann aus (gestrichelte Linie), da die Vibrationsplatte eine geringfügige Drehung vollzieht. Eine sich aufbauende Abweichung zwischen dem durch die Joystick-Stellung vorgegebenen Sollwert und dem Istwert wird sofort durch die Fahrtregelungseinrichtung 7 erkannt und durch Beeinflussung der Unwuchtstellungen und damit der resultierenden Kraftvektoren korrigiert, mit dem Ziel, das Gierratensignal bei Null zu halten.

Kommt es trotzdem zu einer Fahrtrichtungsänderung, z. B. weil die von außen einwirkende Störung zu stark ist, wirkt also eine Drehrate über eine gewisse Zeit ein oder überschreitet einen Grenzwert, so kann bei Anwendung eines geeigneten Regelgesetzes durch Erzeugung eines über entsprechende Zeit wirkenden gegenläufigen Giermoments die Vibrationseinrichtung in ihre Ausgangs-Fahrtrichtung zurückgedreht werden. Die Fahrtregelungseinrichtung 7 ist dabei zweckmäßigerweise derart auszulegen, dass sie nicht nur die Drehung der Vibrationsplatte verhindert, wenn keine Drehung erwünscht ist, sondern auch eine durch äußere Störeinflüsse erfolgte Drehung durch eine Gegendrehung kompensieren läßt.

In Fig. 2a-2 wird ein Fahrzustand gezeigt, indem die Vibrationsplatte eine Kurvenfahrt nach links vorne vollzieht.

Die Joystick-Werte liegen jetzt beispielhaft bei X = 100 und Y = 50, d. h., dass der Bediener weiterhin maximale Vorwärtsfahrt und gleichzeitig aber eine Linksdrehungskomponente, z. B. als Vorgabe für eine Drehrate, verlangt. Die Unwuchten in der Schwingungserregungseinrichtung 2 erzeugen dementsprechend zwei unterschiedliche resultierende Kraftvektoren, derart, dass der - in Fahrtrichtung gesehen - rechte Kraftvektor weiterhin eine Vorwärtskomponente aufweist, während der linke Kraftvektor lediglich vertikal gerichtet ist, also ausschließlich der Bodenverdichtung, nicht aber einer Vorwärtsbewegung dient.

Das Gierratensignal steigt aufgrund der Drehung der Vibrationsplatte an und bleibt dann auf einem konstanten Wert, wenn die Drehung der Vibrationsplatte konstant ist. Der Sollwert für das Gierratensignal ergibt sich wieder aus der Joystick-Stellung, so dass die Fahrtregelungseinrichtung 7 eventuelle Abweichungen des Gierratensignals sofort durch Eingriff in die Unwuchtstellung ausregeln kann.

Fig. 2a-3 zeigt den Fall einer Drehung der Vibrationsplatte im Stand nach links. Der Bediener stellt den Joystick auf die Stellung X = 0 und Y = 100. da er keine Fahrtgeschwindigkeit, sondern lediglich eine Drehung der Vibrationsplatte wünscht. Dazu erzeugen die Unwuchten gegeneinander gerichtete resultierende Kräfte, um eine maximale Drehung zu bewirken. Dementsprechend wird das Gierratensignal auf einem maximalen Wert gehalten.

Fig. 2a-4 zeigt die Vibrationsplatte in Standrüttelung, bei der die Schwingungserregungseinrichtung keinen Vortrieb, sondern lediglich vertikal gerichtete Schwingungen erzeugt. Da die Vibrationsplatte keine Drehung vollzieht, liegt das Gierratensignal bei Null.

Fig. 2b-5 zeigt den Fahrzustand, bei dem der Bediener durch Bewegung des Joysticks in die Stellung X = -100 die volle Rückwärtsfahrt der Vibrationsplatte einstellt. Die Unwuchten werden in eine Stellung bewegt, in der resultierende Kraftvektoren mit maximaler Vortriebswirkung in Rückwärtsrichtung erzeugt werden. Das Gierratensignal bleibt soweit keine Störung der Bewegung erfolgt - bei Null.

Schließlich wird in Fig. 2b-6 ein Zustand dargestellt, in dem der Bediener durch Bewegung des Joysticks in die Stellung X = -100 und Y = -50 eine Kurvenfahrt nach rechts hinten wünscht. In diesem Fall steigt das Gierratensignal wieder auf einen positiven Wert, der hier exemplarisch mit einer Linksdrehung der Vibrationsplatte - bezogen auf eine Vorwärtsfahrt - gleichzusetzen ist.

Wie sich aus obiger Beschreibung ergibt, genügt es, wenn der Joystick 4a für die X- und Y-Koordinaten lediglich einige vorbestimmte Werte ausgibt. So reichen für die die Vorwärts- bzw. Rückwärtsfahrtrichtung bestimmende X-Koordinate die Signalwerte +100, 0, -100 aus. Für die die Drehrichtung bestimmende Y-Koordinate sollten mehrere Einzelwerte vorgesehen werden, nämlich +100, +75, +50, +25, 0, -25, -50, -75 und -100.

Es wurde bei vorstehender Beschreibung angenommen, dass das Gierratensignal bei 0 Volt liegt, wenn die Vibrationsplatte keine Drehung vollzieht. Das Gierratensignal liegt im Bereich einer positiven Spannung, wenn die Vibrationsplatte eine Linksdrehung vollführt, während der Signalwert bei einer Rechtsdrehung negativ wird. Selbstverständlich dienen diese Definitionen nur der Veranschaulichung der Erfindung. In der Praxis können auch andere Werte für das Gierratensignal erreicht werden. Wie oben dargelegt, kann darüber hinaus statt des Gierratensignals auch ein anderes Signal oder eine Kombination mehrerer Signale als Istwert für die Fahrbewegung ermittelt werden.

Bei einer anderen Ausführungsform der Erfindung wird neben der Gierratenmessung gleichzeitig eine Messung der Vorlaufgeschwindigkeit z. B. durch einen zusätzlichen Sensor durchgeführt. Dadurch kann erreicht werden, dass die Vibrationsplatte vorgegebene Kurvenradien durchfährt, d. h. gleichzeitig eine Drehung und eine Vorwärtsbewegung und nicht nur eine vorgegebene Drehung vollzieht, die bei ungünstigen Bedingungen auch zu einer Standdrehung führen kann.

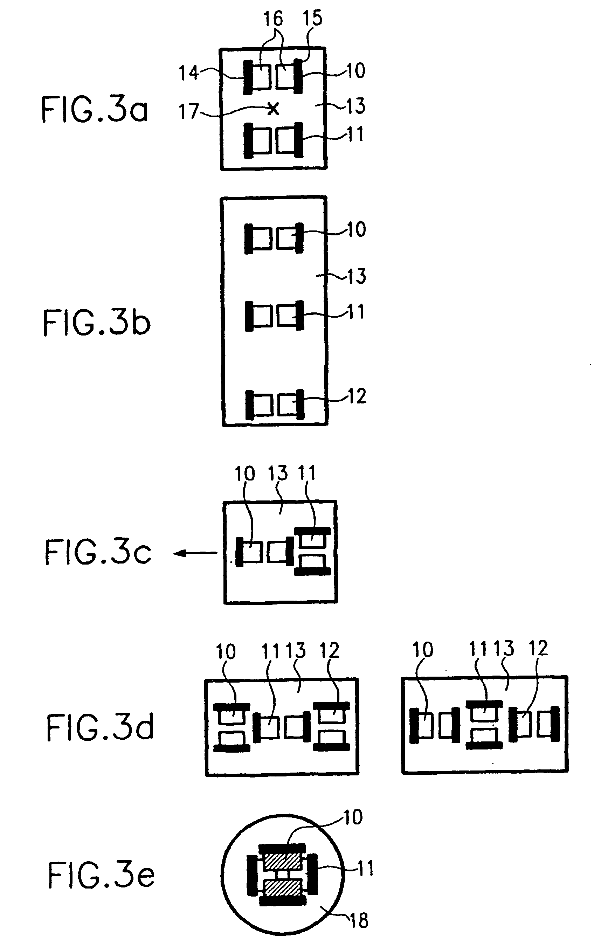

Fig. 3a bis e zeigen in schematischer Draufsicht erfindungsgemäße Bodenverdichtungsvorrichtungen mit unterschiedlicher Anordnung von mehreren Schwingungserregungseinrichtungen.

Im Gegensatz zu der in Fig. 1 gezeigten erfindungsgemäßen Vibrationsplatte ist jede der in den Fig. 3a bis 3e gezeigten, ebenfalls am Beispiel von Vibrationsplatten erläuterten Bodenverdichtungsvorrichtungen statt mit nur einer Schwingungserregungseinrichtung mit mehreren Schwingungserregungseinrichtungen 10, 11, 12 versehen.

Fig. 3a zeigt schematisch eine Vibrationsplatte, bei der zwei Schwingungserregungseinrichtungen 10, 11 auf einer gemeinsamen Bodenkontaktplatte 13 parallel zueinander angeordnet sind.

Die Schwingungserregungseinrichtung 10, 11 sind nur schematisch dargestellt und bestehen jeweils aus zwei parallelen, miteinander formschlüssig drehbar gekoppelten und gegenläufig drehenden Wellen 14, 15, die jeweils eine Unwucht 16 tragen und in ihrer relativen Phasenlage zueinander verstellbar angeordnet sind. Eine axiale Aufteilung von einer der Unwuchten 16 auf der zugehörigen Welle, wie dies bei der Ausführungsform gemäß Fig. 1 und 2 der Fall war, ist bei den in den Fig. 3a bis 3e dargestellten Vibrationsplatten nicht erforderlich, aber grundsätzlich auch möglich.

Die Schwingungserregungseinrichtungen 10, 11 sind parallel zueinander angeordnet, so dass sie in die gleiche Vortriebsrichtung wirken. Durch Einstellen von unterschiedlich starken bzw. unterschiedlich gerichteten resultierenden Kraftvektoren der beiden Schwingungserregungseinrichtungen 10, 11 lässt sich ein Giermoment um eine Hochachse 17 erzeugen, wodurch die Vibrationsplatte lenkbar wird.

Die Fig. 3b - 3d zeigen Varianten der in Fig. 3a gezeigten Vibrationsplatte, die ohne die erfindungsgemäße Fahrtrichtungsstabilisierung in der Praxis nicht anwendbar wären.

So sind bei der Ausführungsform gemäß Fig. 3b drei Schwingungserregungseinrichtungen 10, 11, 12 auf der Bodenkontaktplatte 13 angeordnet. Die mittlere der drei Schwingungserregungseinrichtungen (mit Bezugszeichen 11 gekennzeichnet) muss dabei nicht zwingend zum Vortrieb und damit zum Erzeugen einer Fahrbewegung der Vibrationsplatte beitragen. Vielmehr genügt es, wenn lediglich die äußeren Schwingungserregungseinrichtungen 10, 12 den Vortrieb und die Lenkung bewerkstelligen, während die mittlere Schwingungserregungseinrichtung 11 ausschließlich zum Erzeugen einer vertikal gerichteten Schwingung dient. Dementsprechend einfach kann die mittlere Schwungserregungseinrichtung 11 aufgebaut sein. So ist es z. B. nicht erforderlich, dass die Richtung des von ihr erzeugten resultierenden Kraftvektors einstellbar ist.

Fig. 3c zeigt eine Anordnung, bei der die Schwingungserregungseinrichtungen 10, 11 um 90° verdreht zueinander auf der gemeinsamen Bodenkontaktplatte 13 angeordnet sind. Die Vorwärtsfahrtrichtung der Vibrationsplatte ist durch einen nach links gerichteten Pfeil dargestellt. Somit genügt es für den normalen Vorwärtsbetrieb, dass lediglich die Schwingungserregungseinrichtung 10 einen nach vorne gerichteten Kraftvektor erzeugt. Soweit eine Lenkung der Vibrationsplatte nicht erforderlich ist, ist die von der Schwingungserregungseinrichtung 11 erzeugte Schwingung vertikal gerichtet. Zum Lenken allerdings kann die Schwingung der Schwingungserregungseinrichtung 11 auch mit einer Horizontalkomponente versehen werden, was eine Drehung der Vibrationsplatte bewirkt. Durch ständigen, oszillierenden Richtungswechsel der Horizontalkomponente der von der Schwingungserregungseinrichtung 11 erzeugten Schwingung lässt sich eine schlängelnde Bewegung der Vibrationsplatte erzeugen, durch die Schubspannungen in den zu verdichtenden Boden eingebracht werden können.

Fig. 3d zeigt zwei Beispiele für die Anordnung von drei Schwingungserregungseinrichtungen 10, 11, 12, wobei jeweils die mittlere Schwingungserregungseinrichtung 11 gegenüber den anderen Schwingungserregungseinrichtungen 10, 12 um 90° versetzt ist.

Bei allen Anordnungen, bei denen wenigstens eine Schwingungserregungseinrichtung um 90° gegenüber der Vortriebsrichtung der Vibrationsplatte versetzt ist, kann die Vibrationsplatte im Verdichtungsprozess neben Lenkbewegungen auch einen zur Haupt-Fahrtrichtung parallelen Versatz durchführen. Dies ist inbesondere von Vorteil für eine Automatisierung der Verdichtung von größeren Flächen, bei der die Fläche in parallelen Streifen überfahren werden soll. Ein aufwändiges Wendemanöver am Ende von jedem Streifen kann nämlich entfallen, weil die Vibrationsplatte jeweils nur um die Breite der Bodenkontaktplatte versetzt werden muss, was durch die Bereitstellung der Schwingserregungseinrichtung 11 quer zur Hauptvortriebsrichtung leicht möglich ist.

Fig. 3e zeigt eine weitere Ausführungsform der Erfindung, bei der zwei Schwingungserregungseinrichtungen 10, 11 übereinander angeordnet sind. Die Erregerachsen stehen senkrecht zueinander. Durch geeignete Ansteuerung der beiden Schwingungserregungseinrichtungen 10, 11 kann der resultierende Kraftvektor um die in der Mitte verlaufende Hochachse der Vibrationsplatte beliebig ausgerichtet werden. Im vorliegenden Beispiel greift der resultierende Kraftvektor im Schwerpunkt der Vibrationsplatte an. Auch andere Angriffspunkte können - je nach Gestaltung der Vibrationsplatte - zweckmäßig sein.

Bei dem Beispiel gemäß Fig. 3e sind die Schwingungserregungseinrichtungen 10, 11 gemeinsam auf einer Bodenkontaktplatte 18 befestigt, die einen im Wesentlichen kreisförmigen Grundriss aufweist. Eine derartige Vibrationsplatte kann problemlos in sämtliche Richtungen verfahren werden, ohne dass eine sonst übliche Hauptrichtung beachtet werden müsste. In Verbindung mit der oben beschriebenen Richtungsstabilisierungsregelung kann bei diesem Beispiel eine hohe Richtungsstabilität und Manövrierfähigkeit erreicht werden.

Die in den Fig. 3a bis 3e gezeigten Bodenverdichtungsvorrichtungen haben in Verbindung mit der erfindunggemäßen Fahrbewegungsregelung den Vorteil gegenüber bisher bekannten Vibrationsplatten, dass die hier beispielhaft gezeigten Anordnungen von Schwingungserregungseinrichtungen ohne die erfindungsgemäße Fahrtregelung eine hohe Instabilität der Fahrtrichtung aufweisen würde, was in der praktischen Handhabung, selbst bei handgeführten, also nicht ferngesteuerten Bodenverdichtungsvorrichtungen zu einer hohen Belastung des Bedieners führen würde. Im Gegensatz dazu wird in Verbindung mit der erfindungsgemäßen Fahrtregelungseinrichtung z. B. eine vom Bediener gewünschte Geradeausfahrt auch bei mit unterschiedlicher Frequenz drehenden Wellen der Schwingungserregungseinrichtungen ebenso konstant eingeregelt, wie durch Bodeneinflüsse erzeugte Drehmomente um die Hochachse kompensiert werden.

Es ist offensichtlich, dass statt der in den Fig. 3a bis 3e gezeigten zwei oder drei Schwingungserregungseinrichtungen auch noch mehr Schwingungserregungseinrichtungen auf der gemeinsamen Bodenkontaktplatte angebracht und - zumindest teilweise - von der Fahrtregelungseinrichtung angesteuert werden können.

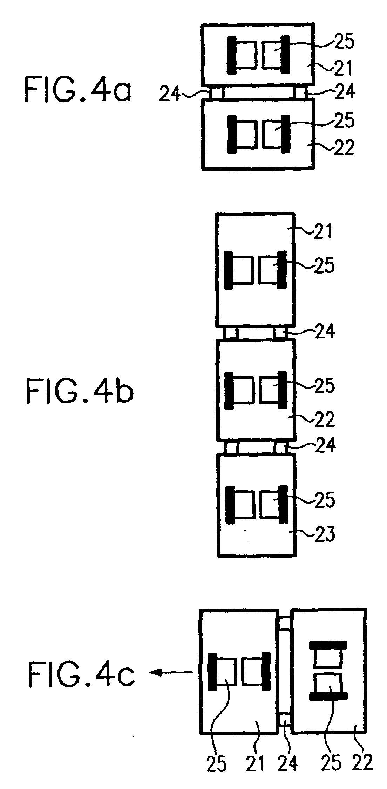

Die Fig. 4a bis 4d zeigen in schematischer Draufsicht erfindungsgemäße Bodenverdichtungssysteme, die jeweils aus mehreren Vibrationsplatten 21, 22, 23 bestehen und durch eine Verbindungsstruktur miteinander richtungsstabil, aber relativ zueinander höhenbeweglich, gegebenenfalls auch elastisch bzw. mit mehreren Freiheitsgraden beweglich verbunden sind.

Fig. 4a zeigt ein erfindungsgemäßes Bodenverdichtungssystem mit zwei Vibrationsplatten 21, 22, die durch Verbindungselemente 24 miteinander verbunden sind.

Jede der Vibrationsplatten 21, 22 trägt eine Schwingungserregungseinrichtung 25, wie sie bereits in Zusammenhang mit den Fig. 3a is 3e erläutert worden sind.

Die Verbindungsstruktur verbindet mit den Verbindungselementen 24 die Vibrationsplatten 21, 22 in geeigneter Weise derart, dass die Vibrationsplatten 21, 22 sich nicht gegeneinander verdrehen können, sondern in ihrer jeweiligen Richtung gehalten werden. Zum Ausgleich von Bodenunebenheiten und der nicht erforderlichen Schwingungssynchronisation der Vibrationsplatten ist aber die relative Beweglichkeit möglich und zweckmäßig.

Die Schwingungserregungseinrichtungen 25 auf jeder der Vibrationsplatten 21, 22 dienen gleichzeitig als Fahrantrieb zum Erzeugen einer Vortriebsbewegung. Grundsätzlich ist es aber möglich, die Schwingungserregungseinrichtung vom Fahrantrieb funktionsmäßig zu trennen. So ist es - wie oben bereits beschrieben - bei einem bekannten Zwei-Wellen-Schwingungserreger möglich, eine starke Vertikalschwingung zu erzeugen, ohne dass eine Vortriebsbewegung bewirkt wird, wenn die resultierenden Kraftvektoren senkrecht stehen (vergleiche z. B. Fig. 2a-4).

Fig. 4b zeigt drei parallel zueinander angeordnete Vibrationsplatten 21, 22, 23, die jeweils ebenfalls über die Verbindungselemente 24 miteinander verbunden sind und jeweils eine Schwingungserregungseinrichtung 25 tragen.

Fig. 4c zeigt zwei Vibrationsplatten 21, 22, auf denen jeweils eine Schwingungserregungseinrichtung 25 befestigt ist, wobei jedoch die Vortriebsrichtung der beiden Schwingungserregungseinrichtungen 25 um 90° zueinander verdreht ist.

Die Schwingungserregersysteme der Vibrationsplatten können ohne Synchronisation oder miteinander synchronisiert betrieben werden. Eine der Vibrationsplatten 21 dient zum Erzeugen des Vortriebs des gesamten Bodenverdichtungssystems, während die zweite Vibrationsplatte 22 neben der Bodenverdichtung der Richtungssteuerung dient. Bei ungestörter Geradeausfahrt (Pfeilrichtung) ist der resultierende Kraftvektor der zur Richtungssteuerung vorgesehenen Vibrationsplatte 22 senkrecht zur Ebene gerichtet oder wird gezielt oszillierend nach links und rechts gerichtet, um z. B. Schubspannungen in das zu verdichtende Gut einzubringen.

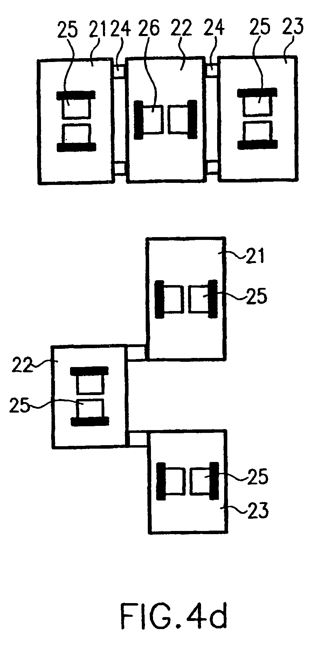

Fig. 4d zeigt Anordnungen von drei miteinander gekoppelten Vibrationsplatten 21, 22, 23, wobei jeweils eine Schwingungserregungseinrichtung 26 um 90° gegenüber den übrigen Schwingungserregungseinrichtungen 25 verdreht angeornet ist.

Wie bei der in Fig. 3d beschriebenen Bodenverdichtungsvorrichtung kann aufgrund der um 90° verdrehten Vortriebsrichtung der Schwingungserregungseinrichtungen 25 auch hier ein Parallelversatz des Gesamtsystems erzielt werden.

Wie bei den Schwingungserregungseinrichtungen gemäß Fig. 3a bis 3e und im Unterschied zu der anhand von den Fig. 1 und 2 beschriebenen Bodenverdichtungsvorrichtung ist es bei den Vibrationsplatten 21, 22, 23 der in den Fig. 4a bis 4d gezeigten Bodenverdichtungssystemen nicht erforderlich, dass in den jeweiligen Vibrationsplatten 21, 22, 23 eine eigene Lenkeinrichtung - z. B. durch zwei auf einer Welle axial zueinander angeordnete Unwuchtmassen - eingebaut ist. Es genügt vielmehr, dass die jeweilige Schwingungserregungseinrichtung die bereits beschriebenen zwei Wellen 14, 15 aufweist, die synchronisiert gegenläufig drehbar sind und jeweils eine Unwuchtmasse tragen, deren Phasenlage einstellbar ist. Insbesondere bei Verwendung von drei Vibrationsplatten, wie in den Fig. 4b und 4d gezeigt, ist es sogar möglich, das bei der Schwingungserregungseinrichtung der mittleren Vibrationsplatte nicht einmal die Phasenlage einstellbar sein muss.

Die Koordination der Schwingungserreger in den Vibrationsplatten ist verständlicherweise äußerst komplex. Aus diesem Grund ist in dem Bodenverdichtungssystem eine Bewegungserfassungseinrichtung wie bei der anhand von Fig. 1 beschriebenen Bodenverdichtungsvorrichtung vorgesehen. Die Bewegungserfassungeinrichtung, z. B. ein Gierratensensor oder ein anderes, bereits oben beschriebenes Bauelement, erfasst einen Istwert für die Fahrbewegung des gesamten Bodenverdichtungssystems.

In einer ebenfalls vorhandenen Fahrtregelungseinrichtung wird der Istwert mit einem vom Bediener über die Fernsteuerung vorgegebenen Sollwert verglichen. Die Fahrtregelungseinrichtung regelt vorhandene Regelabweichungen durch Ansteuern der jeweiligen Schwingungserreger in den Vibrationsplatten aus. Zu diesem Zweck sind in der Fahrtregelungseinrichtung Algorithmen abgespeichert, die eine eindeutige Zuordnung der Lenkfunktionen erlauben.

Wie bereits bei der einzelnen Bodenverdichtungsvorrichtung ist es auch bei dem Bodenverdichtungssystem möglich, durch Bodenunebenheiten o. ä. hervorgerufene Störungen der Fahrbewegung sofort auszugleichen. Die Fahrtregelungseinrichtung muss zu diesem Zweck nur kurzzeitig einen geeigneten Schwingungserreger der Vibrationsplatten verstellen, um eine Korrekturbewegung einzuleiten.

Das Bodenverdichtungssystem weist gegenüber einzelnen Bodenverdichtungsvorrichtungen den Vorteil auf, dass die zugehörigen Vibrationsplatten sehr einfach aufgebaut sein können, da sie keine eigene Lenkeinrichtung benötigen. Lediglich eine Richtungsverstellung des resultierenden Kraftvektors ist erforderlich. Statt dessen können mehrere Vibrationsplatten - also auch mehr als die in Fig. 4 gezeigten zwei oder drei Vibrationsplatten - zu einer großen Einheit mit entsprechender Arbeitsleistung kombiniert werden. Außerdem kann mit geeigneter Anordnung und Ansteuerung ein zur Hauptfahrrichtung paralleler Versatz des Bodenverdichtungssystems erreicht werden. Dies ist insbesondere vorteilhaft zur Automatisierung von Verdichtungsprozessen.

## Patentansprüche

1. Fahrbare Bodenverdichtungsvorrichtung, mit
- einem Fahrantrieb (2) zum Erzeugen einer Vortriebsbewegung:
- einer Lenkeinrichtung (2) zum Erzeugen eines Giermoments um eine Hochachse der Bodenverdichtungsvorrichtung;
- einem Fahrtgeber (4) zur Vorgabe eines Sollwerts für eine Fahrbewegung der Bodenverdichtungsvorrichtung durch einen Bediener;
- einer Bewegungserfassungseinrichtung (6) zum Erfassen eines Istwerts für die Fahrbewegung; und mit
- einer von dem Istwert und dem Sollwert beaufschlagbaren Fahrtregelungseinrichtung (7) zum Ansteuern der Lenkeinrichtung (2) und/oder des Fahrantriebs (2) derart, dass eine durch die Differenz zwischen Ist- und Sollwert gebildete Regelabweichung minimal ist.

2. Bodenverdichtungsvorrichtung nach Anspruch 1. **dadurch gekennzeichnet, dass** die Fahrbewegung eine Fahrtrichtung, eine Ausrichtung, einen Kurs über Grund, eine Drehrate und/oder eine Fahrtgeschwindigkeit umfasst und dass der Fahrtgeber (4) zur Vorgabe eines Sollwerts für die Fahrtrichtung, die Ausrichtung, den Kurs über Grund, die Drehrate und/oder die Fahrtgeschwindigkeit dient.

3. Bodenverdichtungsvorrichtung nach Anspruch 1 oder 2, **dadurch gekennzeichnet, dass** die Fahrbewegung eine Gierrate um die Hochachse umfasst und dass der Sollwert ein Gierratensollwert ist.

4. Bodenverdichtungsvorrichtung nach einem der Ansprüche 1 bis 3, **dadurch gekennzeichnet, dass** die Fahrtregelungseinrichtung (4) die Lenkeinrichtung (2) und/oder den Fahrantrieb (2) derart ansteuert, dass sich die Bodenverdichtungsvorrichtung mit maximaler Fahrtgeschwindigkeit bei minimaler Regelabweichung fortbewegt.

5. Bodenverdichtungsvorrichtung nach einem der Ansprüche 1 bis 4, **dadurch gekennzeichnet, dass** die Bewegungserfassungseinrichtung (6) einen Gierratensensor, einen Kreiselkompass, einen optischen Faserkreisel, einen Erdmagnetfeldsensor, einen GPS-Empfänger, einen Beschleunigungssensor oder eine Kombination dieser Bauelemente aufweist.

6. Bodenverdichtungsvorrichtung nach einem der Ansprüche 1 bis 5, **dadurch gekennzeichnet, dass** der Fahrantrieb wenigstens eine Schwingungserregungseinrichtung (2) aufweist, mit zwei zueinander parallelen, gegenläufig drehbaren und jeweils wenigstens eine Unwuchtmasse tragenden Wellen, deren Phasenlage verstellbar ist.

7. Bodenverdichtungsvorrichtung nach Anspruch 6, **dadurch gekennzeichnet, dass** auf wenigstens einer Welle der Schwingungserregungseinrichtung (2) zwei Unwuchtmassen axial versetzt angeordnet sind und dass die Lenkeinrichtung zum Verstellen der Phasenlage der beiden Unwuchtmassen ausgebildet ist.

8. Bodenverdichtungsvorrichtung nach einem der Ansprüche 1 bis 6, **dadurch gekennzeichnet, dass** der Fahrantrieb und die Lenkeinrichtung durch eine Anordnung von mehreren, zueinander ortsfest getragenen Schwingungserregungseinrichtungen (10, 11, 12) gebildet sind, wobei die Schwingungserregungseinrichtungen (10, 11. 12) jeweils zwei zueinander parallele, gegenläufig drehbare und jeweils wenigstens eine Unwucht (16) tragende Wellen (14, 15) aufweisen, deren Phasenlage verstellbar ist, und wobei jeweils durch eine der Schwingungserregungseinrichtungen (10, 11, 12) jeweils eine Vortriebsbewegung in eine Vortriebsrichtung erzeugbar ist.

9. Bodenverdichtungsvorrichtung nach Anspruch 8, **dadurch gekennzeichnet, dass** die Vortriebsrichtungen der Schwingungserregungseinrichtungen (10, 11, 12) im wesentlichen identisch sind.

10. Bodenverdichtungsvorrichtung nach Anspruch 8. **dadurch gekennzeichnet, dass** die Vortriebsrichtung von wenigstens einer (11) der Schwingungserregungseinrichtungen von denen der anderen (10. 12) abweicht.

11. Bodenverdichtungsvorrichtung nach einem der Ansprüche 8 bis 10. **dadurch gekennzeichnet, dass** wenigstens eine Schwingungserregungseinrichtung vorgesehen ist, durch die keine Vortriebsbewegung erzeugbar ist.

12. Bodenverdichtungsvorrichtung nach einem der Ansprüche 8 bis 11. **dadurch gekennzeichnet, dass** die Schwingungserregungseinrichtungen auf einer gemeinsamen Bodenkontaktplatte (13, 18) angeordnet sind.

13. Bodenverdichtungsvorrichtung nach Anspruch 12, **dadurch gekennzeichnet, dass** die Bodenkontaktplatte (18) einen im wesentlichen kreisförmigen Grundriß aufweist.

14. Bodenverdichtungsvorrichtung nach einem der Ansprüche 8 bis 13, **dadurch gekennzeichnet, dass** zwei Schwingungserregungseinrichtungen (10, 11) übereinander angeordnet sind, deren Vortriebsrichtungen sich unterscheiden.

15. Bodenverdichtungsvorrichtung nach Anspruch 14, **dadurch gekennzeichnet, dass** ein von den Schwingungserregungseinrichtungen (10, 11) erzeugter resultierender Kraftvektor im Schwerpunkt der Bodenverdichtungsvorrichtung angreift.

16. Bodenverdichtungssystem, mit mehreren fahrbaren, miteinander verbundenen Bodenverdichtungsvorrichtungen (21, 22, 23), wobei
- wenigstens eine der Bodenverdichtungsvorrichtungen (21. 22, 23) einen Fahrantrieb zum Erzeugen einer Vortriebsbewegung in eine Vortriebsrichtung sowie eine Schwingungserregungseinrichtung (25) aufweist;
- der Fahrantrieb zu- und abschaltbar ist;
- ein Fahrtgeber zur Vorgabe eines Sollwerts für eine Fahrbewegung des gesamten Bodenverdichtungssystems durch einen Bediener vorgesehen ist;
- eine Bewegungserfassungseinrichtung zum Erfassen eines Istwerts für die Fahrbewegung vorgesehen ist: und wobei
- eine von dem Istwert und dem Sollwert beaufschlagbare Fahrtregelungseinrichtung vorgesehen ist, zum Ansteuern der einzelnen Fahrantriebe derart, dass eine durch die Differenz zwischen Ist- und Sollwert gebildete Regelabweichung minimal ist.

17. Bodenverdichtungssystem nach Anspruch 16, **dadurch gekennzeichnet, dass** die Bodenverdichtungsvorrichtungen (21, 22, 23) miteinander richtungsstabil oder mit mehreren Freiheitsgraden beweglich oder elastisch und/oder relativ zueinander höhenbeweglich verbunden sind.

18. Bodenverdichtungssystem nach Anspruch 16 oder 17, **dadurch gekennzeichnet, dass** die Fahrbewegung eine Fahrtrichtung, eine Ausrichtung, einen Kurs über Grund, eine Drehrate und/oder eine Fahrtgeschwindigkeit umfasst und dass der Fahrtgeber zur Vorgabe eines Sollwerts für die Fahrtrichtung, die Ausrichtung, den Kurs über Grund, die Drehrate und/oder die Fahrtgeschwindigkeit des Bodenverdichtungssystems dient.

19. Bodenverdichtungssystem nach einem der Ansprüche 16 bis 18, **dadurch gekennzeichnet, dass** sich die Vortriebsrichtung von wenigstens einer der Bodenverdichtungsvorrichtungen (22) von der Vortriebsrichtung von wenigstens einer anderen Bodenverdichtungsvorrichtung (21, 23) unterscheidet.

20. Bodenverdichtungssystem nach Anspruch 19, **dadurch gekennzeichnet, dass** die Vortriebsrichtung der wenigstens einen Bodenverdichtungsvorrichtung (22) senkrecht zu der Vortriebsrichtung der anderen Bodenverdichtungsvorrichtung (21. 23) steht.

21. Bodenverdichtungssystem nach einem der Ansprüche 16 bis 20, **dadurch gekennzeichnet, dass** die Schwingungserregungseinrichtung (25, 26) einen Teil des Fahrantriebs bildet.

22. Bodenverdichtungsvorrichtung nach einem der Ansprüche 1 bis 15 oder Bodenverdichtungssystem nach einem der Ansprüche 16 bis 21, **dadurch gekennzeichnet, dass** der Fahrtgeber Bestandteil einer Fernsteuerung (4) ist.

## Claims

1. Mobile ground compacting device, having
- a travelling mechanism (2) for generating a forwards drive movement;
- a steering drive (2) for generating a yawing moment about a vertical axis of the ground compacting device;
- a travel sensor (4) for specifying a desired value for a travel movement of the ground compacting device by means of an operator;
- a movement detecting device (6) for detecting an actual value for the travel movement; and having
- a travel controlling device (7) which can be influenced by the actual value and the desired value for controlling the steering device (2) and/or the travelling mechanism (2) in such a manner that a control deviation formed by the difference between the actual and the desired value is minimal.

2. Ground compacting device as claimed in claim 1, **characterised in that** the travel movement comprises a travel direction, an alignment, a course across the ground, a rotating rate and/or a travel velocity and that the travel sensor (4) serves to specify a desired value for the travel direction, the alignment, the course across the ground, the rotating rate and/or the travel velocity.

3. Ground compacting device as claimed in claim 1 or 2, **characterised in that** the travel movement comprises a yawing rate about the vertical axis and that the desired value is a yawing rate desired value.

4. Ground compacting device as claimed in any one of claims 1 to 3, **characterised in that** the travel control device (4) controls the steering device (2) and/or the travel mechanism (2) in such a manner that the ground compacting device moves forwards at a maximum travel velocity with minimum control deviation.

5. Ground compacting device as claimed in any one of claims 1 to 4, **characterised in that** the movement detecting device (6) comprises a yawing rate sensor, a gyro compass, an optical fibre gyro, an earth magnetic field sensor, a GPS receiver, an acceleration sensor or a combination of these components.

6. Ground compacting device as claimed in any one of claims 1 to 5, **characterised in that** the travel mechanism comprises at least one oscillation exciting device (2), having two mutually parallel shafts which are counter rotatable and in each case carry at least one unbalanced mass, the phase position of said shafts being adjustable.

7. Ground compacting device as claimed in claim 6, **characterised in that** on at least one shaft of the oscillation exciting device (2) two unbalanced masses are disposed axially offset and that the steering device is designed for adjusting the phase position of the two unbalanced masses.

8. Ground compacting device as claimed in any one of claims 1 to 6, **characterised in that** the travelling mechanism and the steering device are formed by an arrangement of several, mutually site-fixed supported oscillation exciting devices (10, 11, 12), wherein the oscillating exciting devices (10, 11, 12) comprise shafts (14, 15) which are mutually parallel, counter rotatable and in each case carry at least one unbalanced mass (16), the phase position of said shafts being adjustable and wherein in each case by virtue of one of the oscillation exciting devices (10, 11, 12) respectively a forwards drive movement can be generated in a forwards drive direction.

9. Ground compacting device as claimed in claim 8, **characterised in that** the forwards drive directions of the oscillation exciting devices (10, 11, 12) are substantially identical.

10. Ground compacting device as claimed in claim 8, **characterised in that** the forwards drive directions of at least one (11) of the oscillation exciting devices differs from those of the other (10, 12).

11. Ground compacting device as claimed in any one of claims 8 to 10, **characterised in that** at least one oscillation exciting device is provided by means of which it is not possible to generate a forwards drive movement.

12. Ground compacting device as claimed in any one of claims 8 to 11, **characterised in that** the oscillation exciting devices are disposed on a common ground contacting plate (13, 18).

13. Ground compacting device as claimed in claim 12, **characterised in that** the ground contacting plate (18) comprises a substantially circular footprint.

14. Ground compacting device as claimed in any one of claims 8 to 13, **characterised in that** two oscillation exciting devices (10, 11) are disposed one above the other, their forwards drive directions being different from each other.

15. Ground compacting device as claimed in claim 14, **characterised in that** a resulting force vector generated by the oscillation exciting devices (10, 11) impacts at the centre of gravity of the ground compacting device.

16. Ground compacting system, having several mobile mutually connected ground compacting devices (21, 22, 23), wherein
- at least one of the ground compacting devices (21, 22, 23) comprises a travelling mechanism for generating a forwards drive movement in a forwards drive direction and an oscillation exciting device (25);
- the travelling mechanism can be switched on and off;
- a travel sensor for specifying a desired value for a travel movement of the entire ground compacting device by an operator is provided;
- a movement detecting device (6) for detecting an actual value for the travel movement is provided; and wherein
- a travel controlling device (7) which can be influenced by the actual value and the desired value is provided for controlling the individual travelling mechanisms in such a manner a control deviation formed by the difference between the actual and the desired value is minimal.

17. Ground compacting system as claimed in claim 16, **characterised in that** the ground compacting devices (21, 22, 23) together are directionally stable or are moveable or elastic with several degrees of freedom and and/or are connected relative to each other in a height-adjustable manner.

18. Ground compacting system as claimed in claim 16 or 17, **characterised in that** the travel movement comprises a travel direction, an alignment, a course across the ground, a rotating rate and/or a travel velocity and that the travel sensor serves to predetermine a desired value for the travel direction, the alignment, the course across the ground, the rotating rate and/or the travel velocity of the ground compacting system.

19. Ground compacting system as claimed in any one of claims 16 to 18, **characterised in that** the forwards drive direction of at least one of the ground compacting devices (22) differs from the forwards drive direction of at least one other ground compacting device (21, 23).

20. Ground compacting system as claimed in claim 19, **characterised in that** the forwards drive direction of the at least one ground compacting device (22) is perpendicular to the forwards drive direction of the other ground compacting device (21, 23).

21. Ground compacting system as claimed in any one of claims 16 to 20, **characterised in that** the oscillation exciting device (25, 26) forms a part of the travelling mechanism.

22. Ground compacting device as claimed in any one of claims 1 to 15 or ground compacting system as claimed in any one of claims 16 to 21, **characterised in that** the travel sensor is a component of a remote control (4).

## Revendications

1. Dispositif mobile de compactage du sol comportant
- un mécanisme de roulement (2) pour produire un mouvement de propulsion ;
- un dispositif de direction (2) pour produire un moment d'embardée autour d'un axe vertical du dispositif de compactage du sol ;
- un transmetteur de marche (4) pour sélectionner une valeur de consigne pour un mouvement de marche du dispositif de compactage du sol par un opérateur ;
- un dispositif de détection de déplacement (6) pour détecter une valeur réelle pour le mouvement de marche ; et comportant
- un dispositif de régulation de vitesse (7), pouvant être actionné par la valeur réelle et la valeur de consigne, pour commander le dispositif de direction (2) et/ou le mécanisme de marche (2) de manière qu'un écart de régulation, formé par la différence entre la valeur réelle et la valeur de consigne, soit minime.

2. Dispositif de compactage du sol selon la revendication 1, **caractérisé en ce que** le mouvement de marche comprend une direction de marche, une orientation, une route, une vitesse de rotation et/ou une vitesse de marche, et **en ce que** le transmetteur de marche (4) sert à sélectionner une valeur de consigne pour la direction de marche, l'orientation, la route, la vitesse de rotation et/ou la vitesse de marche.

3. Dispositif de compactage du sol selon la revendication 1 ou 2, **caractérisé en ce que** le mouvement de marche comprend une embardée autour de l'axe vertical et **en ce que** la valeur de consigne est une valeur de consigne de l'embardée.

4. Dispositif de compactage du sol selon l'une des revendications 1 à 3, **caractérisé en ce que** le dispositif de régulation de marche (4) commande le dispositif de direction (2) et/ou le mécanisme de marche (2) de manière que le dispositif de compactage du sol avance avec une vitesse de marche maximale pour un écart de régulation minimal.

5. Dispositif de compactage du sol selon l'une des revendications 1 à 4, **caractérisé en ce que** le dispositif de détection de déplacement (6) comporte un capteur d'embardée, un compas gyroscopique, un gyroscope à fibres optiques, un capteur de champ magnétique terrestre, un récepteur GPS, un capteur d'accélération ou une combinaison de ces éléments de construction.

6. Dispositif de compactage du sol selon l'une des revendications 1 à 5, **caractérisé en ce que** le mécanisme de marche comporte au moins un dispositif de génération d'oscillations (2) avec deux arbres parallèles l'un à l'autre, pouvant tourner en sens contraire et portant chacun au moins une masse de balourd, dont la position de phase est réglable.

7. Dispositif de compactage du sol selon la revendication 6, **caractérisé en ce que** sur au moins un arbre du dispositif de génération d'oscillations (2) sont disposées deux masses de balourd décalées axialement et **en ce que** le dispositif de direction est conçu pour le réglage de la position de phase des deux masses de balourd.

8. Dispositif de compactage du sol selon l'une des revendications 1 à 6, **caractérisé en ce que** le mécanisme de marche et le dispositif de direction sont formés par un agencement de plusieurs dispositifs de génération d'oscillations (10, 11, 12) supportés de manière fixe l'un par rapport à l'autre, les dispositifs de génération d'oscillations (10, 11, 12) comportant chacun deux arbres (14, 15) parallèles l'un à l'autre, pouvant tourner en sens contraire et portant chacun au moins un balourd (16), dont la position de phase est réglable, et un mouvement de propulsion dans une direction de propulsion pouvant être produit respectivement par l'un des dispositifs de génération d'oscillations (10, 11, 12).

9. Dispositif de compactage du sol selon la revendication 8, **caractérisé en ce que** les directions de propulsion des dispositifs de génération d'oscillations (10, 11, 12) sont sensiblement identiques.

10. Dispositif de compactage du sol selon la revendication 8, **caractérisé en ce que** la direction de propulsion d'au moins l'un (11) des dispositifs de génération d'oscillations s'écarte de celle des autres (10, 12).

11. Dispositif de compactage du sol selon l'une des revendications 8 à 10, **caractérisé en ce qu'**il est prévu au moins un dispositif de génération d'oscillations par lequel aucun mouvement de propulsion ne peut être produit.

12. Dispositif de compactage du sol selon l'une des revendications 8 à 11, **caractérisé en ce que** les dispositifs de génération d'oscillations sont disposés sur une plaque de contact avec le sol (13, 18) commune.

13. Dispositif de compactage du sol selon la revendication 12, **caractérisé en ce que** la plaque de contact avec le sol (18) présente un contour sensiblement circulaire.

14. Dispositif de compactage du sol selon l'une des revendications 8 à 13, **caractérisé en ce que** deux dispositifs de génération d'oscillations (10, 11) dont les directions de propulsion diffèrent sont superposés.

15. Dispositif de compactage du sol selon la revendication 14, **caractérisé en ce qu'**un vecteur de force, produit par les dispositifs de génération d'oscillations (10, 11), agit au centre de gravité du dispositif de compactage du sol.

16. Système de compactage du sol comportant plusieurs dispositifs mobiles de compactage du sol (21, 22, 23), reliés entre eux, dans lequel
- au moins l'un des dispositifs de compactage du sol (21, 22, 23) comporte un mécanisme de marche pour produire un mouvement de propulsion dans une direction de propulsion, ainsi qu'un dispositif de génération d'oscillations (25) ;
- le mécanisme de marche peut être mis en marche et à l'arrêt ;
- un transmetteur de marche est prévu pour sélectionner une valeur de consigne pour un mouvement de marche de l'ensemble du système de compactage du sol par un opérateur ;
- un dispositif de détection de déplacement est prévu pour détecter une valeur réelle pour le mouvement de marche ; et dans lequel
- un dispositif de régulation de marche, pouvant être actionné par la valeur réelle et la valeur de consigne, est prévu pour commander les différents mécanismes de marche de manière qu'un écart de régulation, formé par la différence entre la valeur réelle et la valeur de consigne, soit minime.

17. Système de compactage du sol selon la revendication 16, **caractérisé en ce que** les dispositifs de compactage du sol (21, 22, 23) sont reliés entre eux de manière stable en direction ou mobiles avec plusieurs degrés de liberté ou élastiquement et/ou mobiles en hauteur les uns par rapport aux autres.

18. Système de compactage du sol selon la revendication 16 ou 17, **caractérisé en ce que** le mouvement de marche comprend une direction de marche, une orientation, une route, une vitesse de rotation et/ou une vitesse de marche, et **en ce que** le transmetteur de marche sert à sélectionner une valeur de consigne pour la direction de marche, l'orientation, la route, la vitesse de rotation et/ou la vitesse de marche du système de compactage du sol.

19. Système de compactage du sol selon l'une des revendications 16 à 18, **caractérisé en ce que** la direction de propulsion d'au moins l'un des dispositifs de compactage du sol (22) diffère de la direction de propulsion d'au moins un autre dispositif de compactage du sol (21, 23).

20. Système de compactage du sol selon la revendication 19, **caractérisé en ce que** la direction de propulsion d'au moins un dispositif de compactage du sol (22) est perpendiculaire à la direction de propulsion de l'autre dispositif de compactage du sol (21, 23).

21. Système de compactage du sol selon l'une des revendications 16 à 20, **caractérisé en ce que** le dispositif de génération d'oscillations (25, 26) forme une partie du mécanisme de marche.

22. Dispositif de compactage du sol selon l'une des revendications 1 à 15 ou système de compactage du sol selon l'une des revendications 16 à 21, **caractérisé en ce que** le transmetteur de marche fait partie intégrante d'une télécommande (4).
